# EUROPEAN PATENT APPLICATION

(11) **EP 1 574 426 A1**
(43) Date of publication of application: **14.09.2005**
(21) Application number: 03761881.6
(22) Date of filing: 26.06.2003
(51) Int. Cl.: B64C 23/06, B64C 15/02, B64C 3/32, B64C 29/00

(54) **METHOD FOR PRODUCING A LIFTING FORCE, AEROPLANE, TAKE OFF AND LANDING METHOD**

(30) Priority: 27.06.2002 RU 2002117064
(71) Applicant: AVROUTSKI, Garri Izrailevich, Moscow, 125047 (RU); AVROUTSKAIA, Irina Garrievna, Moscow, 125047 (RU)
(72) Inventor: AVROUTSKI, Garri Izrailevich, Moscow, 125047 (RU); AVROUTSKAIA, Irina Garrievna, Moscow, 125047 (RU)
(74) Representative: Einsel, Martin
(86) International application number: PCT/RU2003/000277
(87) International publication number: WO 2004/002822

(57) **Abstract**

The inventive method for producing a lifting force consists in forming a binary cyclone with the aid of thermal currents of at least one gas-jet device which are directed over the top surface of an object situated in the atmosphere of the Earth. Said binary cyclone is embodied in the form of at least one pair of contacting rotatable gas columns which are filled with said currents and flow over at least two areas situated on the top surface of said object. The inventive aeroplane comprises a top surface, at least one controlled gas-jet device and controlled aerodynamic elements, and is characterised in that the gas-jet device is arranged in such a way that the thermal currents directed over the top surface of the aeroplane produce a binary cyclone. The aerodynamic elements are arranged in such a way that the surfaces thereof are divergent from the currents of the binary cyclone. The inventive take off and landing method consists in producing the binary cyclone prior to take off and landing, in adding energy produced by fuel consumption to the currents of the binary cyclone in order to form sufficient lifting force values during take off and landing and sufficient impact air pressure currents flowing over the controlled aerodynamic elements. The displacement of the surfaces of the aerodynamic elements with respect to the currents of the binary cyclone is performed in such a way that the forces and moments stabilising the aeroplane are produced during take off and landing.

## Description

### Field of the Invention

The invention relates to air transport.

### Prior State of the Art

Airplane is a preferred kind of long-distance passenger transport. The volume and geography of worldwide travel are expanding. Progress in air transport is, however, attended by escalation of negative social and environmental factors that could reach critical levels unless an alternative is found to traditional airplane technologies. The problem requires development of new takeoff and landing devices and methods to make flying safer and the airplane more friendly to the environment.

Airplane is an accepted name for a flying vehicle provided with an engine and a lifting wing. Modern airplanes, in particular, airliners that carry the bulk of air traffic worldwide, have a high cruising speed, large seating capacity, and a long range. They are equipped with reversible engines of high takeoff and braking power, and complex takeoff and landing high-lift devices, but the long landing strips of airfields is the only place where they realize the required lifting force capacities, at high airspeeds, and at significant angles of attack.

The largest number of air accidents is caused in tense takeoff and landing conditions. Many of them are related to loss of control upon engine failure, or failure of aerodynamic and mechanical takeoff and landing devices under the effect of high operating strains imposed by conventional takeoff and landing methods involving takeoff and landing runs on the ground. A majority of accidents are traceable to human error. The accident rate and, still more important, the severity of catastrophes depend mostly on the high speeds of airplanes moving near or on the ground during takeoff and landing by traditional methods. Without enough altitude or time to make decisions, especially in bad weather, the speed of required actions and workloads on pilots and ground operators reach critical levels, becoming the chief causes of human errors.

Growing seating capacities and range of airliners require higher takeoff and landing speeds and greater takeoff power of airliner engines. Accordingly, there is an increase in control degradation rates and severity of catastrophes occurring upon failure of engines, and elements of takeoff and landing high-lift devices, and aerodynamic stabilization devices. An estimated shortage of landing lifting force of long-range airliners requires dumping excess fuel in emergency situations so as to avoid complications of an accident. Greater takeoff power of engines causes high noise levels and greater emissions. The area of, and the atmosphere around, airports is polluted by both noise and emissions of airplane engines, and also by the noise and emissions of ground transport vehicles carrying air passengers around airfields. Enormous amounts of time and funds are spent on shuttling passengers between cities and airports. Considerable land areas and resources are withdrawn from other social needs to build and expand airports and numerous transport and supporting infrastructure facilities associated with airports. The population, nature, and structures in large districts of cities, suburbs, coastal areas, and water expanses are constantly exposed to the threat of air accidents.

The trend to build up engine takeoff power, therefore, makes harder the efforts to deal with airliner safety and compatibility with the environment.

The inventor believes that airliner safety and compatibility with the environment can, in a long term, be enhanced by a vertical takeoff and landing method. Such a method could insure considerable controlled slowdown of operations, hover prior to landing, reduction in touchdown speed to virtually zero, a possibility of soft landing in any point of the globe, and emergency landing without fuel dumping. The method will also make takeoff and landing independent of the human factor and weather, and in this way will significantly enhance safety by fully automating takeoff and landing, a possibility that cannot be afforded on existing airliners operating at high speeds in narrow air and ground corridors of modern airports.

If translated into reality, vertical takeoff and landing of airliners could expand the geography of air travel, ease passenger traffic, take the current load off existing airports and their infrastructure, reduce the area and time of exposure of the environment to engine noise and emissions, move air terminals closer to urban transport networks, and free up high-priced suburban lands.

The time airliners need, and passengers feel uncomfortable about, for taxiing, setting on a flight course, and heading for the landing strip could be cut out, flight time shortened, and transfer costs in time and money reduced.

Takeoff and landing techniques are based on methods for generating a lifting force and airplane stabilization forces and moments. Three methods are used in aviation to produce a lifting force - aerodynamic, aerostatic, and fluid-dynamic.

In helicopters, the aerodynamic force required to permit vertical takeoff and landing is generated by main rotor blades rotating at angles of attack relative to atmospheric air, with stabilizing and propulsion forces being produced by inclination of the rotation plane and modulation of blade angles of attack. Because of the low efficiency of lifting and propulsive properties of main rotors next to the efficiency of airplane engines and lifting wings, advanced passenger helicopters are significantly inferior in performance characteristics (**Super Puma**. Technical Data, EADS, 2002) to advanced trunk airliners, in particular, only a third as effective in speed, one-fifteenth in seating capacity, and one-fifteenth in range.

In aerostatic flying vehicles, heated air or lighter-than-air gas is used to generate a lifting force, and low-power engines are used for stabilization at takeoff and landing, for which reason, aerostatic vehicles possess significant environmental advantages. Bulky aerostatic (lighter-than-air) vehicles, however, have a low cruising speed and are susceptible to air perturbations to an extent that embarkation and disembarkation require construction of takeoff and landing terminals with heavy mooring facilities (U.S. Patent No. 5,346,162). Aerostatic vehicles are unsuitable, and are not used, for mass passenger carriage.

High-speed vertical takeoff and landing airplanes use a fluid-dynamic (jet propulsion) method of generating a lifting force, which method consists in that pivotal engines or exhaust streams of the engines are directed vertically downward with a thrust exceeding the weight pull of the airplane. Vertical flight is changed to horizontal by pivoting the engines or turning exhaust streams of the engines relative to the lateral axis of the airplane to a substantially horizontal position (U.S. Patent No. 3,208,695). Stabilization at takeoff and landing is achieved by controlling the moments of force of jet streams from the main or auxiliary engines. When the stalling speed is exceeded in horizontal flight, the lifting force is produced by a wing, more efficient conventional controlled aerodynamic elements being used for stabilization purposes. Such airplanes possess redundant structural elements and controls. Required takeoff and landing power (vertical thrust) of their engines is three to four times that of helicopter engines and the takeoff engine power of traditional airplanes; accordingly, the severity of their accidents upon failure of their engines is higher, and so is environmental pollution in their takeoff and landing areas.

An aerodynamic method used in traditional airplanes to generate a lifting force consists in reducing pressure in the air flowing around the top wing surface relative to the pressure applied to the undersurface. The engine thrust is smaller than the weight force of the airplane. A sufficient lifting force and sufficient velocity head of currents flowing around the surfaces of controlled aerodynamic surfaces are only produced when a certain airspeed (stalling speed) is exceeded. The properties of a helicopter and airplane are combined in a V22 vehicle (Bell-Boeing), in which pivotal main-rotor engines are positioned on the panels of a relatively small wing. Such vehicles have a higher speed and range than helicopters, but they are unable to develop anything like the speed and range, or have the seating capacity, of airliners.

Known in the art are methods for enhancing the lifting force of a wing and raising the efficiency of controlled aerodynamic elements of airplanes by accelerating currents flowing around the top surface of the wing and the surfaces of the aerodynamic elements. For this purpose, engine exhausts are directed over the airplane in such a way that they flow over its top surface and downward, and also flow over the surfaces of controlled aerodynamic elements (U.S. Patents No. 2,988; No. 3,297,278, and No. 3,697,020).

The closest prior (pertinent) art of this invention in airplane design is an improvement made in airplane wings under French Patent No. 1,212,391. The improvement comprises at least one jet engine mounted on top of the wing so that its stream could flow over the top surface of the wing backward, and means required to deflect the stream downward so that it could apply pressure to said surface at an angle thereto across the wingspan and flow across said surface, leaving the wing edge in the form of a long and thin sheet extending across the wingspan width; controlled aerodynamic elements used in the improvement being in the form of deflectors designed to turn the engine stream downward, and in the form of a flap extending along the wing overflow boundary to deflect the sheet flow leaving the wing downward.

Traditional airplanes and improved vehicles, including those under French Patent No. 1,212,391, cannot take off and land vertically because a required and sufficient aerodynamic lifting force cannot be generated unless a horizontal takeoff and landing speed is attained, that is, without landing strip run.

The pertinent art of this invention is also an airplane, **A340,** acknowledged as the best trunk airliner in terms of seating capacity and range.

The world's best airliners in service use a "regular" aerodynamic design, with swept-back wings and a developed system of high-lift devices and ailerons. Their tail assembly includes a stabilizer with elevators and a fin with a direction rudder, with two or four reversible engines positioned in front and below the wings.

This is, in particular, the four-engine design of the **A340-300** airliner, with a seating capacity of up to 440 passengers and a maximum flying distance of 13,500 km with 295 passengers on board (Airbus Industries, Setting the Standards, June 1997).

Conventional methods for producing a lifting force and vertical takeoff and landing methods are not suitable for an airplane like the modern airliner, because the required three- to four-fold increase in the takeoff and landing power of the engine would call for a prohibitive complication of design and reduce airplane safety, while its operation would cause devastating pollution of the environment in the takeoff and landing area and aggravate the consequences of accidents upon failure of engines and airliner stabilization devices.

It needs to be specifically emphasized that existing aerodynamic and fluid-dynamic methods for producing a lifting force use kinetic energy only, while the heat energy of the engine stream does not perform any useful work.

This invention makes it possible to correct all of the above deficiencies of traditional airplanes, and avoid using existing vertical takeoff and landing methods and vehicles.

### Disclosure of the Invention

This invention helps improve airplane safety in flight and environment friendliness to an extent allowing airplanes of large seating capacity and range to be based, take off and land in suburbs, bodies of water, and in ecologically clean, and previously inaccessible, parts of the globe.

The technical object of the invention consists in minimizing engine power at vertical takeoff and vertical landing, and in eliminating engine emissions near the ground.

The idea and novelty of the invention lie in using the kinetic energy of the exhaust streams of airplane engines and the heat energy of fuel combustion in the engines and in auxiliary fuel burners to produce a specific controlled cyclone above the airplane with a lifting force sufficient for takeoff and landing.

The novelty of this invention also lies in using the energy of the velocity head of such cyclone streams to generate airplane stabilization forces and moments.

*Cyclone* is a natural atmospheric phenomenon caused by falling atmospheric pressure in the form of an air column of air currents heated by solar energy and rotating above the ground surface. By analogy, the inventor uses this name for the name of his invention and introduces a previously unknown concept, *binary cyclone,* to describe a phenomenon generated artificially by hot gas exhaust streams of gas-jet devices and directed over the top surface of an object located in the earth's atmosphere, in at least a pair of contacting rotating gas columns filled with said streams and flowing over two pads on the top surface of the object, to cause an atmospheric pressure drop above the top surface of the object. Accordingly, the inventor uses the terms: *cyclonic force,* a lifting force produced by the cyclone (binary cyclone), and *cycloplane,* an airplane designed to produce, and use the effect of, a binary cyclone.

The inventor has accomplished this technical task by using the binary cyclone phenomenon and developing an appropriate theory. He has developed a model of a dynamic system consisting of an object, binary cyclone, and the atmosphere, and identified perturbation types and appropriate control principles. He has estimated the benefits and qualitative advantages of using the binary cyclone phenomenon in aviation. Below follows a description of basic elements of the binary cyclone theory essential for an understanding of the idea of this invention.

It is common knowledge that when, in certain situations, a surface layer of air heated to a temperature above that of the surrounding atmosphere starts to rotate in a flat whirlwind above a local ground area, a cyclone forming above the area gradually fills up a vertical volume of the atmosphere in the form of a rotating low-pressure column.

The inventor has discovered the following physical properties that allow specific cyclones to be generated artificially and their properties used in aviation:
- A steady controlled cyclone (monocyclone) can be generated above the top surface of an object located in the earth's atmosphere by directed streams from gas-jet devices, for example, exhaust streams of airplane engines, fuel burner flame, gas generators, and so on.
- The object is acted upon by a cyclonic force produced by pressure falling on the top surface of the object as a function of volume, density, and kinetic moment of the cyclone, area of the surface (lift area) of the object blown over by the cyclone, distribution of gas densities and temperatures within the cyclone and in the atmosphere, and functions of the mass and heat exchange between the cyclone, on the one hand, and the object and the atmosphere, on the other. It is possible to control the cyclonic force by filling (pumping) up the cyclone with kinetic and heat energy of the exhaust streams from gas-jet devices.
- The object is acted upon by the aerodynamic involvement moment of the cyclone stream defined as a function of density and velocity (velocity head) of the cyclone stream in the surface layer, and also as aerodynamic drag coefficient and the area of the lift pad surfaces blown over by the cyclone stream and other elements positioned in the cyclone stream. It is possible to control the involvement moment and to produce aerodynamic force components and moments applied to the object by deflecting the surfaces of controlled aerodynamic elements in the form of empennage panels, fins, rudders, stabilizers, deflectors, and spoilers located in the cyclone stream relative to said stream.
- The object and the cyclone are inseparable and have mutual aerodynamic stability (quasi-elastic interaction effect) during lateral and vertical displacements and angular deflections of streamlined surfaces of the object relative to the cyclone axis. The object can be stabilized in a horizontal position by minor perturbations applied to the cyclone and to the object from the atmosphere, and by object imbalance moments by producing asymmetry in the cyclone stream over the object surface by deflecting the surfaces of the above-mentioned controlled aerodynamic elements.
- During horizontal relative movement of the object and the atmosphere, the object is acted upon by a system of cyclone reaction forces and moments in response to the countercurrent affected by the parameters of cyclone gases and the atmosphere, velocity vectors of the cyclone stream and the countercurrent, and the volume and energy of the monocyclone (counter-reaction effect).

Where the above parameters have a significant magnitude, the counter-reaction effect causes a significant spatial drift and a spatial turn of the object, throwing uncertainty on the application of the monocyclone phenomenon in aviation.

Binary cyclone is a preferred option for use in aviation owing to the symmetry of the airplane-binary cyclone system, which is more stable under the effect of the atmosphere and is controllable because the effects of quasi-elasticity, involvement, and counter-reaction forces and moments can be symmetrized about the direction of air countercurrent. The resultant effect of the countercurrent on the airplane is confined to the drag force and pitch that can be compensated normally by engine thrust and longitudinal aerodynamic balancing by producing a horizontal empennage moment.

This invention utilizes the combined effect of the two old methods considered above - aerodynamic and aerostatic - to produce a lifting force. The method for producing a cyclonic lifting force is advantageous if only because it is free from the critical physical limitations of either of the prior art methods, in particular:
- It does not place any limitations, as the aerodynamic method does, on the magnitude of the lifting force that depends on the velocity head during the airstrip run of a conventional airplane - the velocity head of a binary cyclone can be given any desired magnitude by pumping in kinetic energy of gas-jet streams, without expending any kinetic energy during the takeoff run of an airplane.
- It does not place any limitations on the magnitude of lifting force that depends on the density of gas and volume of the conventional airship bag - the volume of hot binary cyclone gas can be expanded infinitely by pumping it up by rapid combustion of any desired quantity of fuel in the gas-jet devices of a cycloplane.

After landing, the binary cyclone can be detached from the cycloplane by slowing down the velocity of its streams flowing over the airplane surface, whereupon it rises into, and diffuses in, the upper layers of the atmosphere, being heated to a point higher than the temperature of the ambient atmosphere. Binary cyclone detachment can be accelerated by rapidly burning a quantity of pulverized fuel at a selected altitude above the airplane.

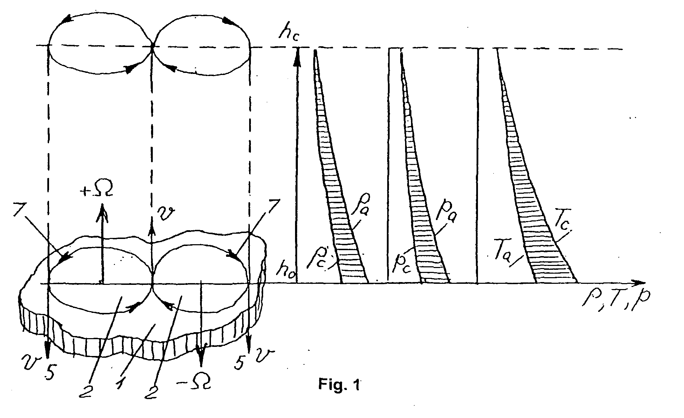

The binary cyclone, the object, and the atmosphere form a non-autonomous heterogeneous controlled dynamic system shown diagrammatically in Fig. 1 as a simplified physical model having a pair (generally, several pairs) of vertical contacting gas columns rotating at angular velocities plus and minus Ù flowing over two symmetrical, in particular round, pads 2 on the top surface of an object 1.

The model is described by the following variables: altitude - hₒ and h_{c} density - ñ, temperature - T_{c}, pressure - p_{c}, peripheral velocity - õ_{c} and kinetic and thermodynamic energy components of binary cyclone streams, standard parameters ñₐ, Tₐ and pₐ of the ambient atmosphere, diffusion functions of binary cyclone streams in the ambient atmosphere, and also the functions of the kinetic, thermodynamic, and aerodynamic forces of the atmosphere, gas-jet devices, and aerodynamic elements of the object. The binary cyclone is associated with the object through the parameters of quasi-elastic and involvement effects.

Fig. 1 also shows typical graphs of changes in the temperature, density, and pressure of the atmosphere and binary cyclone as a function of altitude. The graphs show temperature T_{c} to be higher than Tₐ, density ñ_{c} lower than ñₐ, and pressure p_{c} of the cyclone lower than pₐ of the atmosphere around the object. The binary cyclone columns rise above the object in the atmosphere to an altitude at which p_{c} and pₐ become equal.

Stability of the airplane-binary cyclone-atmosphere system against perturbations is maintained, and vertical movement of the object is controlled, by adjusting the dynamic balance between the three full energy components of binary cyclone applied, expended to perform useful work, and dissipated into the atmosphere.

Useful energy is total work performed to suspend the object (generate a lifting force equal to the weight force of the object) and work to lift the object at takeoff, which is equal to the product of weight force by altitude increment. As the object altitude decreases, the respective part of useful energy is returned to the energy balance of the binary cyclone through increase in the rotation velocity of the gas columns, adding to the lifting force, which explains the inseparability and mutual stability (quasi-elasticity) of the object and binary cyclone with altitude. An advantage of this method for producing a cyclonic lifting force consists in that a considerable suspension energy can be accumulated in advance, for a certain length of time before takeoff in the binary cyclone by filling (pumping) it up with kinetic and heat exhaust streams of gas-jet devices of relatively small power. Any power applied upon completion of the pumping process must only compensate for the dissipation rate of binary cyclone energy into the atmosphere.

The ratio of the lifting force to the drag (aerodynamic quality) of the cycloplane during takeoff, hover, and descent prior to landing is significantly higher than is normal for airplanes. Besides, a cyclonic lifting force is produced by the heat energy of engine exhaust, so the required engine power of the cycloplane is reduced significantly in comparison with the takeoff power of conventional airplane engines.

An important advantage of the binary cyclone method and safety advantage of an airplane consists in that energy can be pumped in and sufficiently high levels of cyclonic force and velocity head of flows over the aerodynamic surfaces maintained by delivering mostly heat energy of burning fuel. Gas-jet devices, such as fuel burners or gas generators, are also suitable, in addition to engines, in accordance with this invention, for pumping and balance regulation of the heat energy of a binary cyclone. A free-burning fuel develops a maximum calorific value and nearly full expansion of the gas within a binary cyclone, contributing to a high takeoff efficiency, for which reason the time required to prepare a cycloplane for flight is shorter, fuel costs lower, and the takeoff rate faster than in the case of conventional airplanes.

The heat and moment pulse required to compensate for diffusion and maintain the velocity head of binary cyclone streams are produced preferably by the flame of fuel burners and relatively low power (thrust) of the engines.

Fuel burners are definitely more reliable than airplane engines. Even if all engines fail in flight, hover or landing, therefore, no degradation of the lifting force or stabilization forces and moments occurs, as this typically occurs in similar conditions upon failure of engines and, at times, failure of aerodynamic elements of high-speed airplanes. Owing to the mass and heat inertia of a binary cyclone, the lifting force and velocity head of its streams are reduced gradually, and as it is dissipated its energies may be compensated by an increase in the power of burner flame, so the acceleration and descent speed of the cycloplane prior to touchdown can be reduced to zero. The cycloplane is stabilized in a horizontal position at takeoff and landing, making unnecessary any maneuvering, and the discomfort and loss of flight time typical of regular airliners. Because of the steeper takeoff and landing paths, and improved radar and heat contrast, that is, improved visibility of the cycloplane by ground, onboard, and satellite tracking and warning systems, air traffic can be controlled and airplanes separated in flight more reliably.

An environmental benefit of the method of this invention further consists in that hot engine exhausts and fuel combustion products are absorbed by the cyclone at takeoff and rise up from the ground together with the climbing cycloplane. After landing and detachment of the binary cyclone, the hot currents and fuel combustion products within it rise to, and diffuse in, the upper layers of the atmosphere. Minimizing the takeoff and landing power of engines and screening off acoustic and heat streams of engines and flame of fuel burners (by having such streams reflected upward by the top surfaces of the cycloplane) significantly mitigate the impact of the cycloplane on the environment.

The subject matter of this invention is a method for producing a lifting force, which comprises using heated streams of at least one gas-jet device, directed over the top surface of an object located in the terrestrial atmosphere, to generate a binary cyclone in the shape of at least one pair of contacting rotating gas columns filled up by said streams and flowing over at least two pads on the top surface of the object.

The invention is also aimed at developing an airplane having a top surface provided with at least one pair of symmetric lift pads; at least one controlled gas-jet device, and controlled aerodynamic elements, the gas-jet device being mounted so as to use heated streams flowing over the top surface of the airplane to produce a binary cyclone in the form of at least one pair of contacting rotating gas columns filled with said streams and flowing over at least two pads on the top surface of the airplane, and the aerodynamic elements being designed to deflect their surfaces relative to the binary cyclone streams to generate airplane stabilization forces and moments. Each of the controlled gas-jet devices is an aviation engine, or a fuel burner, or a gas generator. Each of the controlled aerodynamic elements is a pivotal fin or rudder, or a deflectable horizontal empennage panel, or a deflector, or a spoiler.

An airplane embodiment is characterized in that it comprises a fuselage and a high wing, part of the top surface of which is in the shape of two round pads, with two side engines mounted over the periphery of said pads; vertical empennage panels in the form of two deflectable side fins with rudders, and four spoilers; two pivotal lift stabilizer panels with ailerons being attached to said wing; said fuselage mounting a reversible engine, a deflectable fin with a rudder, and two deflectable panels of a horizontal front empennage, all the rudder-equipped fins being positioned in the exhaust streams of the respective engines, and fuel burners being mounted on the fuselage, side engines, rudders of the side fins, and on the horizontal empennage panels.

A takeoff and landing method of an airplane designed as described above uses the above-described method for producing a lifting force so that a binary cyclone is generated prior to takeoff and landing, and the power of a gas-jet device is used to add energy produced by burning fuel to the binary cyclone streams to generate sufficient takeoff and landing lifts and a sufficient velocity head of currents flowing over the surfaces of controlled aerodynamic elements, deflection of the surfaces of the aerodynamic elements relative to the binary cyclone streams being controlled at takeoff and landing to generate airplane stabilization forces and moments.

Once the airplane has landed, the power and direction of streams from the gas-jet devices are controlled and the surfaces of the aerodynamic devices are deflected to slow down the streams of the binary cyclone gas columns flowing over the top surface of the airplane to detach the binary cyclone from the airplane.

An additional quantity of pulverized fuel is burned above the airplane to accelerate detachment of the binary cyclone from the airplane.

This invention allows an airplane to take off and land vertically at a low takeoff and landing engine power; prevents loss of airplane control upon failure of the engines at takeoff and landing; and ensures that engine emissions are removed from the ground.

This invention allows environment-friendly mass-scale air transport vehicles and super-heavy vehicles to take off, hover in the atmosphere, and land vertically in safety.

The invention is illustrated below with reference to the accompanying charts, drawings, and descriptions, which only serve to illustrate the idea of the invention and do not restrict the possibility of any other embodiments being performed in accordance with this invention.

### Brief Description of the Drawings

**Fig. 1** shows a diagram and parameters of a model of the object-binary cyclone-atmosphere system;
**Fig. 2** is a top diagrammatic view of binary cyclone generation;
**Fig. 3** is a top diagrammatic view of a cycloplane having three pairs of lift pads;
**Fig. 4** is a top view of a cycloplane in cruising flight;
**Fig. 5** is a sectional view of a cycloplane taken along the line A-A; and
**Fig. 6** is a front view of a cycloplane during takeoff or landing.

### Embodiments of the Invention

Various embodiments of the cycloplane of this invention differ from one another in the configuration of the top surface of the cycloplane blown over by one pair or several pairs of binary cyclone columns, variety of types, and the number, combination, and location of controlled gas-jet devices and controlled aerodynamic elements. As usual, the lift pads on the top surface of the wing of high-speed airplanes have convex surfaces.

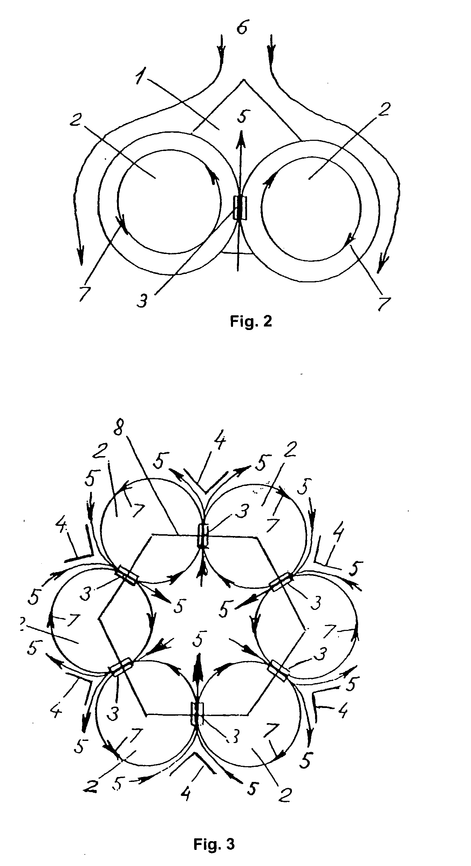

**Fig. 2** shows a simple diagrammatic view illustrating a method for producing a binary cyclone indicated by arrows **7** above a surface **1,** by a single stream **5** from a gas-jet device **3** over the common periphery of two pads **2** and an air countercurrent **6** flowing over pads **2** laterally thereof over the periphery of each of them. It is more efficient to generate a binary cyclone by three streams flowing from gas-jet devices over the top surface of an object, as shown by arrows **5** in **Fig. 1.**

The diagrammatic view of **Fig. 3** illustrates the design of an embodiment of a cycloplane and generation of three pairs of binary cyclone streams **7** by the streams of six gas-jet devices or engines **3** placed between symmetric round pads **2** and above the periphery thereof, the centers of the pads lying in the vertices of an equilateral hexagon **8.** Controlled aerodynamic devices in the form of deflectors **4** are positioned in the streams **5** of the gas-jet devices **3.** This embodiment of a cycloplane places no engineering limitations on the area of the top surface, or the number of pads thereon, or the number and power of gas-jet devices used. A cycloplane designed and built as shown in Fig. **3** and having the dimensions of an airliner has a design payload capacity eight times that of the airliner, and can be used as a suspended platform, a crane, fire fighting vehicle, atmospheric earth satellite, and so on.

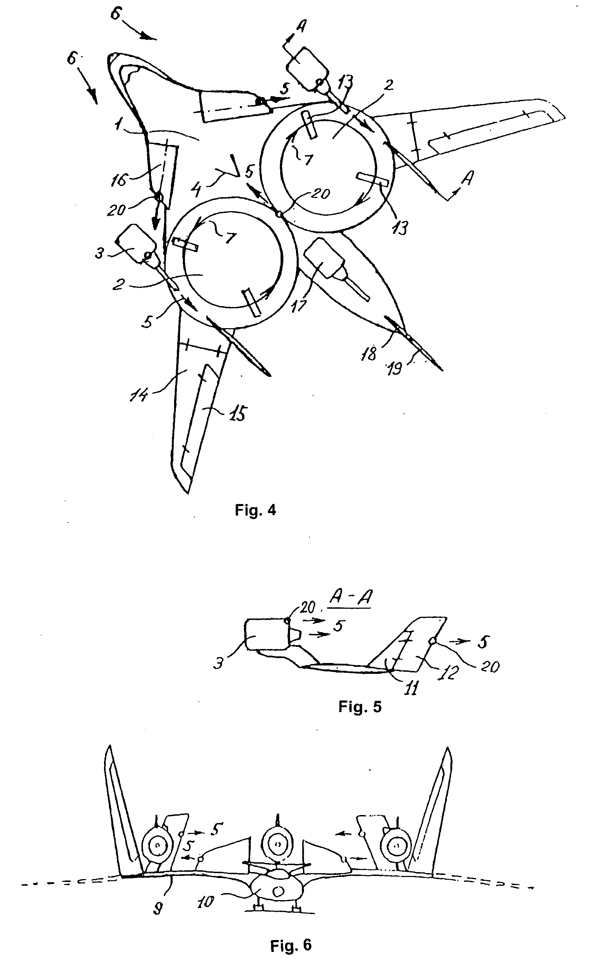

**Figs. 4, 5, and 6** illustrate another embodiment of the invention, in particular, a cycloplane designed for use as an air transport vehicle. The cycloplane has a high wing **9** and a load carrying fuselage **10.** Part of the top surface of the central section of the wing is in the form of two symmetric round convex lift pads **2,** provided at the sides thereof, and above them, with two engines **3,** two pivotal fins **11** with rudders **12,** and four spoilers **13.** Deflectable panels **14** of a lift stabilizer with ailerons **15** are pivotally attached to the wing. Pivotal panels **16** of a horizontal front empennage are mounted on the fuselage **10,** which also carries pivotal deflectors 4, a reversible tail engine **17,** and a fin **18** with a rudder **19,** and fuel burners **20** are mounted on the side engines **3,** side rudders **12,** panels **16** of the front empennage, and fuselage **10.**

A binary cyclone is generated prior to takeoff by streams **5** of side engines **3** directed symmetrically relative to the periphery of the lift pads **2** and the reversed stream of the tail engine **17,** provided that the surfaces of side fins **11,** rudders **12,** stabilizer panels **14,** ailerons **15,** front empennage panels **16,** and deflectors **4** are deflected symmetrically, whereupon binary cyclone streams **7** are filled up with energy by controlling the exhaust stream power of engines **3** and **17,** and burners **20.**

The resultant vector of the wind force and engine thrust is preferably maintained during takeoff, landing, and hover at around zero by turning the cycloplane windward, using engine power, and controlling the thrust vector modulus. To go over from vertical takeoff to horizontal flight, the propulsive force of the thrust is increased, the surfaces of the aerodynamic elements (the above-mentioned fins, rudders, lift stabilizer panels, ailerons, front empennage panels, and deflector), and the streams of the gas-jet devices (the above-mentioned engines and burners) are directed substantially along air countercurrents 6, as a result of which the binary cyclone streams are blown back and transformed into a slipstream typical of airplane cruising.

To change from horizontal flight to vertical landing, the resultant propulsive force of thrust and wind is lowered to zero and reversed substantially by the thrust of the tail engine **17,** as a result of which the altitude and horizontal speed of the cycloplane are reduced, a binary cyclone is generated over pads **2** and is filled up with the kinetic and heat energy of streams from engines **3** and **17** and flows (flame) of burners **20.** It is to be noted that as the cycloplane descends, the binary cyclone also uses a quantity of slipstream energy and energy released through loss of altitude and retardation of cycloplane speed in the atmosphere. Accordingly, the slipstream is transformed into binary cyclone streams **7** with an accumulated energy sufficient to produce a lifting force that suspends the cycloplane and slows down its vertical speed to zero prior to touchdown. The final step of vertical landing consists in causing the cycloplane to hover at a minimum altitude with an engine thrust equal to the wind force, and touchdown speed at almost zero. On landing, the binary cyclone streams are slowed down by reversing engine thrust and deflecting away the controlled aerodynamic elements, as a result of which the binary cyclone is detached from the cycloplane and soars up from the ground. To accelerate detachment and soaring, a quantity of pulverized fuel is burned at a specified altitude above the cycloplane.

Horizontal front empennage panels **16** and lift stabilizer panels **14** being pivoted to angles more than plus or minus 90 degrees, their surfaces can be aligned along the air countercurrent and the cycloplane controlled at large angles of attack characteristic of vertical takeoff and landing.

Placing pivotal fins **11** with rudders **12** in the exhaust streams of engines **3** and **17** contributes to a higher efficiency of binary cyclone generation and to the efficiency of cycloplane yawing stabilization in all flight modes, making it possible to significantly reduce the area of vertical empennage surfaces blown over.

The central section surfaces of wing **9,** the surfaces of lift stabilizer panels **14** pivoted to the center section of wing **9,** and pivotal panels **16** of the front empennage form together the lifting surface of the cycloplane, which is an integrated delta-shaped swept-back wing with side and back circle arcs of lift pads **2.** The cross-section and contour of load-carrying fuselage **10,** the contours, areas and span of lift stabilizer panels **14,** and panels **16** of the horizontal front empennage have shapes and dimensions ensuring sufficient controllability, longitudinal balancing, and a high aerodynamic quality in cruising flight.

In the cycloplane configuration of Figs. 4, 5 and 6, the characteristic that determines cruising quality, the ratio of wing elongation to the relative area of the surface blown over in flight, has a value of about 2, which is close to airliners' characteristic. With engines **3** and **17** mounted in top position, a certain increase in the lifting force coefficient is achieved as a result of increases in the velocity of streams flowing over the top surfaces of wing **9,** fuselage **10,** and panels **16** of the front empennage.

Ultimately, the design aerodynamic quality of the cycloplane is increased by a factor of more than 20, which ensures a high fuel efficiency and maximum range similar to the best performances of modern trunk airliners.

For an identical span of lifting surfaces and takeoff weight, the cycloplane has the seating capacity and cruising speed of airliners at 35% less engine power. The power of cycloplane engines is only designed to maintain a desired cruising speed, rather than ensure takeoff. A cycloplane having the size of the **A340** airliner may, therefore, have three identical engines instead of four required for the A340. Airliners of a smaller seating capacity and shorter range are normally powered by two engines. It is to be noted that a cycloplane of their parameters will required three engines, but each of them will have a power only half as large. Modern aircraft engines - reversible high-bypass ratio ducted-fan engines and reversible propeller thrust turboprop engines - allow their kinetic and heat power to be controlled fairly efficiently to vary flow velocities and energy balance of a binary cyclone at takeoff and landing, and in intermediate flight modes.

The design lifting force required for cycloplane takeoff is generated within no more than 80 seconds. Moreover, compared with an airliner, the cycloplane uses up to 15% of maximum engine thrust and up to 70% of the fuel, most of which is used by fuel burners.

It is preferred to pump in fuel from ground sources before takeoff.

It is also preferred to use environment-friendly fuel for the fuel burners.

### Industrial Applicability

This invention is suitable for use in the aircraft industry, in air transport technologies, and other industries and technologies requiring load lifting and takeoff and landing by flying vehicles of various applications.

## Claims

1. A method for producing a lifting force, wherein heated streams of at least one gas-jet device directed over the top surface of an object located in the earth's atmosphere are used to generate a binary cyclone in the form of at least one pair of contacting rotating gas columns, which are filled with said streams and flow over two pads provided on the top surface of the object.

2. An airplane having a top surface provided with at least one pair of symmetric lift pads; at least one controlled gas-jet device, and controlled aerodynamic elements, wherein the gas-jet device is mounted in such a way that its heated streams directed over the top surface of the airplane generate a binary cyclone in the form of at least one pair of contacting rotating gas columns filled with said streams and flowing over two pads on the top surface of the airplane, the aerodynamic elements being designed to deflect their surfaces relative to the binary cyclone streams to produce airplane stabilization forces and moments.

3. An airplane as claimed in claim **2,** wherein each controlled gas-jet device is an aviation engine, or a fuel burner, or a gas generator.

4. An airplane as claimed in claims **2** and **3,** wherein each controlled aerodynamic element is a deflectable fin or rudder, or a deflectable horizontal empennage panel, or a deflector, or a spoiler.

5. An airplane as claimed in claims **2** to **4,** wherein it comprises a fuselage and a high wing, part of the top surface of the wing being in the form of two round pads, with two side engines mounted above the periphery of said pads; vertical empennage panels in the form of two deflectable side fins with rudders, and four spoilers, two pivotal lift stabilizer panels with ailerons being pivotally attached to said wing; said fuselage mounting a reversible engine, a deflectable fin with a rudder, and two deflectable horizontal front empennage panels, all the fins with rudders being positioned in the exhaust streams of the respective engines, and fuel burners being mounted on the fuselage, side engines, side fin rudders, and the horizontal empennage panels.

6. A method for takeoff and landing of an airplane designed and built in accordance with any of claims **2** to **5,** wherein the method of claim **1** is used prior to takeoff and landing to generate a binary cyclone, and the power of the gas-jet device is controlled to add fuel combustion energy to the binary cyclone streams to produce a takeoff and landing lifting force and a sufficient velocity head of the flows around the surfaces of the controlled aerodynamic elements, deflection of the surfaces of the aerodynamic elements being controlled at takeoff and landing relative to the binary cyclone streams to generate airplane stabilization forces and moments.

7. A method as claimed in claim **6,** wherein the streams of the binary cyclone gas columns flowing over the top surface of the airplane are slowed down on airplane landing by controlling the power and direction of the streams of the gas-jet devices and deflection of the surfaces of the aerodynamic elements to detach the binary cyclone from the airplane.

8. A method as claimed in claim **7,** wherein a quantity of pulverized fuel is further burned over the airplane to accelerate detachment of the binary cyclone from the airplane.
